# EUROPÄISCHE PATENTSCHRIFT

(11) **EP 2 150 688 B1**
(45) Veröffentlichungstag und Bekanntmachung des Hinweises auf die Patenterteilung: **21.12.2011**
(21) Anmeldenummer: 08759435.4
(22) Anmeldetag: 06.05.2008
(51) Int. Cl.: F01N 3/20

(54) **VORRICHTUNG UMFASSEND EINEN GROSSEN ELEKTRISCH BEHEIZBAREN WABENKÖRPER**
DEVICE COMPRISING A LARGE ELECTRICALLY HEATABLE HONEYCOMB BODY
DISPOSITIF COMPRENANT UN CORPS ALVÉOLAIRE VOLUMINEUX À CHAUFFAGE ÉLECTRIQUE

(30) Priorität: 25.05.2007 DE 102007024563
(43) Veröffentlichungstag der Anmeldung: 10.02.2010
(73) Patentinhaber: Emitec Gesellschaft für Emissionstechnologie mbH, 53797 Lohmar (DE)
(72) Erfinder: KONIECZNY, Jörg-Roman, 53804 Much (DE); BRÜCK, Rolf, 51429 Bergisch Gladbach (DE); HODGSON, Jan, 53840 Troisdorf (DE)
(74) Vertreter: Rössler, Matthias
(86) Internationale Anmeldenummer: PCT/EP2008/055574
(87) Internationale Veröffentlichungsnummer: WO 2008/145491

(56) Entgegenhaltungen:
- EP-A- 0 937 501
- WO-A-92/13636
- JP-A- 5 312 029
- US-A- 4 505 107
- US-A- 4 928 485
- US-A- 5 259 190
- US-A- 5 308 591

## Beschreibung

Die vorliegende Erfindung betrifft eine Vorrichtung mit einem großen elektrisch beheizbaren Wabenkörper, wobei dieser Kanäle bildende Blechfolien aufweist, die über ein Gehäuse elektrisch kontaktiert sind. Die Erfindung findet besondere Anwendung im Kraftfahrzeugbereich, wobei beispielsweise elektrisch beheizbare Wabenkörper mit einem Durchmesser größer 200 Millimeter benötigt werden.

Die Entwicklung elektrisch beheizbarer metallischer Wabenkörper wurde in den letzen 20 Jahren maßgeblich von der Anmelderin vorangetrieben. So kann beispielsweise auf die WO 92/02714 verwiesen werden. Dort ist ein Wabenkörper beschrieben, der aus lagenweise angeordneten, zumindest teilweise strukturierten Blechen aufgebaut ist, die eine Vielzahl von für ein Abgas durchströmbare Kanäle bilden, welche von der einen Stirnseite zur anderen verlaufen. Zudem sind mehrere, in Richtung von einer Stirnseite zur anderen verlaufende, flächige Spalte und/oder elektrisch isolierende Schichten so positioniert, dass sich mindest ein zusammenhängender, elektrisch leitfähiger und in einer Querschnittsebene verlaufender Strompfad ergibt. Nun werden die Bleche mit ihrem einen Ende an einem ersten Anschlusskontakt und mit ihrem zweiten Ende an dem zweiten Anschlusskontakt elektrisch leitend angebunden. Auf diese Weise wird insbesondere ermöglicht, eine Stromzufuhr und- abfuhr im Wesentlichen in einer Ebene zu realisieren.

Ein etwas anderes Konzept geht auch der WO 92/13636 hervor. Der dort beschriebene elektrisch beheizbare Wabenkörper weist zumindest zwei Scheiben auf, die voneinander beabstandet und mit Stützstiften zueinander positioniert sind. Diese Anordnung gestattet es, eine erste Scheibe im Hinblick auf eine schnelle Aufheizbarkeit durch durchströmendes Abgas oder durch elektrischen Strom auszulegen und/oder die mechanische Festigkeit der Wabenkörper zu gewährleisten. Insbesondere wird dort auch erläutert, dass es möglich ist, die Bleche in den hintereinander angeordneten Scheiben mittels Stützstiften miteinander elektrisch leitend zu verbinden. So wird insbesondere vorgeschlagen, einen mäanderförmigen Strompfad auszugestalten, der fortlaufend einzelne Blechpakete der beiden Scheiben in Reihe verbindet.

Die JP 05 312029 A offenbart einen beheizbaren Wabenkörper. der in einer Sternschaltung mit Drehstrom betrieben wird wobei zwei rundsätzliche Ausführungsformen unterschieden werden können.

In einer ersten Ausführungsform erfolgt die Kontaktierung der Kontaktstellen des Wabenkörpers mit den drei Phasen des Drehstroms über das Gehäuse des Wabenkörpers. Dazu befinden sich auf der Gebäuseaußenfläche drei um 120° versetzte Abschlüsse zum Anschluss der Statorwicklungen eines Drehstromgenerators. Die Kontaktstellen des Wabenkörpers mit den Anschlüssen befinden sich auf den gegenüberliegenden Gehäuseinnenflächen.

In einer zweiten Ausführungsform wird das Gehäuse als Neutralleiter der Sternschaltung verwendet. Dieser ist nicht direkt mit der Spannungsquelle verbunden. Die Kontaktierung der drei Phasen des Drehstromes erfolgt im Zentrum des Gehäuses. Die Kontaktstellen des Wabenkörpers befinden sich in unmittelbarer Nähe zu den Anschlüssen am Gehäuse.

Auch wenn sich die erläuterten Konzepte im wesentlichen sehr gut bewährt haben und derzeit in verschiedensten Anwendungen zum Einsatz gelangen können, besteht gleichwohl der Wunsch nach noch einfacher aufgebauten Wabenkörpern, die insbesondere geeignet sind, auch bei großen Querschnitten bzw. Durchmesser (z.B. bei stationären Anwendungen oder bei Einsätzen im Nutzfahrzeugbereich) eine gleichmäßige Heizleistung zu generieren.

Hiervon ausgehend ist es Aufgabe der vorliegenden Erfindung, die mit Bezug auf den Stand der Technik geschilderten Probleme zumindest teilweise zu lindern. Insbesondere soll eine Vorrichtung umfassend einen elektrisch beheizbaren Wabenkörper angeben werden, die eine gleichmäßige Erwärmung eines den Wabenkörper durchströmenden Fluides auch bei großem Durchmesser des Wabenkörpers gewährleistet. Zudem soll die Herstellung solcher Wabenkörper vereinfacht und günstiges gestaltet werden können.

Diese Aufgaben werden gelöst mit einer Vorrichtung gemäß den Merkmalen des Patentanspruchs 1. Vorteilhafte Ausgestaltungen der Erfindung werden in den abhängig formulierten Patentansprüchen angegeben. Es ist darauf hinzuweisen, dass die in den abhängig formulierten Patentansprüchen angegebenen Merkmale in beliebiger, technologisch sinnvoller, Weise miteinander kombiniert werden können, und weiterer Ausgestaltungen der Erfindung aufzeigen. Die Beschreibung, insbesondere im Zusammenhang mit den Figuren, führt weitere besonders bevorzugte Ausfuhrungsbeispiele der Erfindung an.

Die erfindungsgemäße Vorrichtung umfasst einen elektrisch beheizbaren Wabenkörper, wobei dieser Kanäle bildende Blechfolien aufweist, die über ein Gehäuse elektrisch kontaktiert sind, wobei das Gehäuse einen Anschluss zum Verbinden mit einer Spannungsquelle und eine Mehrzahl von dem Anschluss entfernt angeordnete Kontaktstellen zum Kontaktieren der Blechfolien hat, sowie jeweils einen Kontaktleiter zwischen Anschluss und einer Kontaktstelle, die den gleichen elektrischen Widerstand aufweisen.

Die Kanäle des Wabenkörpers erstrecken sich bevorzugt im Wesentlichen gradlinig und in axialer Richtung des Wabenkörpers. Die Kanäle sind mit zumindest teilweise strukturiert ausgeführten Blechfolien gebildet, wobei bevorzugt abwechselnd glatte und strukturierte Blechfolien zu jeweils einem Stapel angeordnet sind. Die Blechfolien können in die Kanäle hineinragende Wandabschnitte (Leitflächen und dergleichen) ebenso aufweisen wie Schlitze oder Öffnungen, die zur Bereitstellung einer Quervermischung des die Kanäle durchströmenden Abgases und/oder zur Einstellung eines vorgegebenen Strompfades vorgesehen sein können.

Das Gehäuse stellt regelmäßig ein metallisches, im wesentlichen Rohr-ähnliches, Gehäuse dar. Dieses ist nun mit (nur) einem Anschluss zum Verbinden mit einer Spannungsquelle ausgeführt. Ein solcher Anschluss bzw. eine so genannte Elektrode, dient insbesondere dazu, den Strom von Außen, zumindest teilweise durch das Gehäuse hindurch elektrisch isoliert zu führen und somit eine Stromzufuhr hin zu den Blechfolien zu ermöglichen. Als Spannungsquelle kommt insbesondere eine Batterie in Betracht, wobei als Betriebspannung 12 bis 14 Volt (bzw. einem Vielfachen davon wie 24, 36 oder 42 Volt) bereit gestellt sein sollten.

Das Gehäuse weist zudem eine Mehrzahl von Kontaktstellen zum Kontaktieren der Blechfolien auf. Damit ist insbesondere gemeint, dass ein Stromfluss vom Anschluss über das Gehäuse hin zu den Blechfolien nicht nur über eine einzelne Kontaktstelle (oder die Elektrode direkt) sondern über mehrere, parallel geschaltete, Kontaktstellen vorgenommen wird. Dabei ist jede Kontaktstelle regelmäßig als separater Bestandteil des Gehäuses ausgeführt, wobei insbesondere die Kontaktstellen gegeneinander isoliert ausgebildet sind. Die Verbindung der Kontaktstelle hin zum Anschluss erfolgt jeweils über einen Kontaktleiter, der ebenfalls aus einem elektrisch leitenden Material gefertigt ist. Die Kontaktleiter sind nun so ausgebildet, dass diese den gleichen elektrischen Widerstand zwischen dem Anschluss und der jeweiligen Kontaktstelle aufweisen. Damit ist insbesondere gemeint, dass die Kontaktleiter eine unterschiedliche Distanz zwischen Anschluss und Kontaktstelle überbrücken, also "eigentlich" eine unterschiedliche Länge haben müssten bzw. tatsächlich haben.

Gleichwohl wird jedoch hier sichergestellt, dass diese den gleichen elektrischen Widerstand aufweisen, was beispielsweise durch entsprechenden Materialien, Kontaktleiter, Querschnitte und Ähnliches realisiert sein kann. Insbesondere liegt die Differenz der elektrischen Widerstände aller Kontaktleiter in einem Bereich kleiner 10 %, bevorzugt kleiner 3 %, und insbesondere kleiner 1 %.

Unter Umständen ist auch möglich, dass zumindest ein Kontaktleiter wenigstens teilweise länger ausgeführt sind, als die Distanz zwischen Anschluss und Kontaktstelle verlangen würde, wobei insbesondere ein Kontaktleiter-Reservoir (z. B. durch eine Schleifenbildung des Kontaktleiters) gebildet ist. Mit der hier beschriebenen Maßnahme ist nun gewährleistet, dass für den Fall, wenn mehrere Kontaktstellen parallel an den Blechfolien angeschlossen werden, eine gleichmäßige Stromversorgung und damit auch ein gleichmäßiges Erhitzen mit hoher Effektivität ermöglicht wird.

Bevorzugt ist dabei eine Vorrichtung, wobei die Blechfolien zu einer Mehrzahl von Stapeln angeordnet sind, wobei alle Blechfolien eines Stapels mit einer Kontaktstelle elektrisch leitend verbunden sind. Mit anderen Worten bedeutet dies z.B., dass der Querschnitt des elektrisch beheizbaren Wabenkörpers mit einer Mehrzahl von Stapeln, insbesondere mit mindestens drei oder sogar vier Stapeln unabhängig voneinander gewundener Blechfolien ausgeführt ist, die insbesondere gegeneinander elektrisch isoliert sind. Für jeden dieser Stapel ist nunmehr jeweils eine einzelne Kontaktstelle vorgesehen, so dass alle Blechfolien dieses einen Stapels dort elektrisch leitend kontaktiert sind.

Darüber hinaus wird als vorteilhaft erachtet, dass die Blechfolien gegenüberliegende Endbereiche aufweisen, mit denen sie am Gehäuse anliegen. Dies trifft insbesondere auch den Fall, dass eine Mehrzahl von Stapeln den Wabenkörper bildet. Bevorzugt sind dann die Blechfolien dann so angeordnet, dass eine einmalige Faltung bzw. maximale Krümmung der Blechfolien verwirklicht wurde, so dass alle Endbereiche der Blechfolien an einer Seite des Stapels und der gekrümmte, mittlere Abschnitt der Blechfolien auf der gegenüberliegenden Seite angeordnet sind. Diese Blechfolien sind nun vorteilhafter Weise so in dem Gehäuse positioniert, dass diese Endbereiche am Gehäuse anliegen. Dabei ist bevorzugt, dass alle Endbereiche eines Stapels so an dem Gehäuse anliegen, dass keine Endbereiche von Blechfolien anderer Stapel dazwischen positioniert sind.

Gemäß einer Weiterbildung wird nun auch vorgeschlagen, dass die Blechfolien einen Innenbereich aufweisen, der elektrisch leitend mit einer elektrischen Masse verbunden ist. Der Innenbereich ist insbesondere ein Bereich der Blechfolien, der im Wesentlichen mittig zwischen den Endbereichen positioniert ist. Für den Fall, dass es sich hierbei erneut um eine Mehrfach-Stapel-Anordnung handelt, bildet den Innenbereich der Stapelbereich, der den Endbereichen gegenüber liegt, und mit einer starken Krümmung ausgeführt ist. Genau in diesem Innenbereich, also im Hinblick auf den Stapel in einem weit von den Endbereichen liegenden Bereich (insbesondere in einem zentralen Bereich des Wabenkörpers), erfolgt die Kontaktierung der Blechfolien mit einer elektrischen Masse. Somit bildet sich also ein Strompfad aus, der vom Anschluss ausgeht, dann über einen Kontaktleiter hin zur jeweiligen Kontaktstelle fließt, dort beispielsweise in einen einzelnen Stapel und all seine Blechfolien eingeleitete wird, und dann entlang der Blechfolien schließlich bis hin zur elektrischen Masse strömt. Dort wird der Strom aus den Blechfolien abgeführt.

Insoweit wird auch als vorteilhaft erachtet, dass die Blechfolien von ihrer Kontaktstelle bis hin zu einem Innenbereich, der elektrisch leitend mit einer elektrischen Masse verbunden ist, den gleichen elektrischen Widerstand aufweisen. Damit ist nun gewährleistet, dass nicht nur über das Gehäuse eine gleichmäßige Beaufschlagung der mehreren Stapel mit Strom stattfindet, sondern auch, dass alle Blechfolien eines Stapels parallel und gleichmäßig mit Strom beaufschlagt sind. Damit lässt sich ein besonders homogenes Temperaturfeld bzw. eine gleichmäßige Heizleistung verwirklichen.

Einer weiteren Ausgestaltung der Vorrichtung zufolge sind die Kontaktleiter des Gehäuses als eine Beschichtung ausgeführt. Für das aufbringen einer für diesen Zweck geeigneten Beschichtung, die insbesondere elektrisch leitend und hochtemperatur - korrosionsfest sein sollte, bietet sich z. B. das Verfahren Flammenspritzen an. Die Beschichtung kann dann in einfacher Weise auf ein vollständig geschlossenes, in Umfangsrichtung also nicht unterteiltes, Gehäuse aufgetragen werden, wobei erforderlichenfalls zwischen den Kontaktleitern elektrische Isolationsschichten aufgebracht bzw. angeordnet sein können.

Um gerade die Stabilität eines solchen elektrisch beheizbaren Wabenkörpers mit großem Querschnitt zu verbessern wird auch vorgeschlagen, dass der eine elektrisch beheizbare Wabenkörper über eine Stirnseite an einem weiteren Trägerkörper abgestützt ist. Damit ist insbesondere gemeint, dass Mittel vorgesehen sind, die auf (nur) eine Stirnseite des elektrisch beheizbaren Wabenkörpers (und ggf. in die Kanäle hineinragen) einwirken und mit einem, vorteilhafter Weise in Strömungsrichtung eines Abgases nachgelagerten, Trägerkörpers zusammenwirken. Eine Verformung des elektrisch beheizbaren Wabenkörpers, beispielsweise in Folge einer hohen thermischen und dynamischen Belastung, wie sie im Abgassystem von Kraftfahrzeugen auftritt, wird so reduziert.

In diesem Zusammenhang wird als vorteilhaft erachtet, dass eine Mehrzahl von elektrisch leitenden Kontaktstiften den elektrisch beheizbaren Wabenkörper über eine Stirnseite abstützt und elektrisch leitend mit dem weiteren Trägerkörper verbindet. Das bedeutet mit anderen Worten auch, dass eine Stromzufuhr über den elektrisch beheizbaren Wabenkörper und einer Stromabfuhr über den Trägerkörper erfolgt, der letztendlich mit einer elektrischen Masse verbunden ist. Somit kann der zweite Trägerkörper auch als elektrisch beheizbarer Wabenkörper ausgeführt sein. Zur Gewährleistung eines dauerhaften und stabilen elektrischen Kontaktes wird vorgeschlagen, dass sich die elektrisch leitenden Kontaktstifte zumindest teilweise in die Kanäle und/oder Wickelöffnungen im Innenbereich der Stapel von Blechfolien hinein erstrecken und somit beide Funktionen erfüllen.

Darüber hinaus ist auch vorteilhaft, dass mehrere separate Kontaktleiter über den Anschluss und extern über eine Kontrolleinheit mit einer Spannungsquelle verbindbar sind. Dass meint insbesondere, dass eine getrennte Stromversorgung der einzelnen Stapel via den entsprechenden Kontaktleiter ermöglicht wird, wobei die Kontrolleinheit die zeitliche und/oder örtliche Stromzufuhr zumindest eines Stapels bedarfsweise regelt. Die Kontaktleiter können so beispielsweise (am Gehäuse) und/oder hin zur Kontrolleinheit (insbesondere extern) mit Mitteln zur gezielten Behinderung eines Stromflusses (z.B. Schalter, etc.) versehen sein. Damit kann eine bedarfsorientierte und energetisch effiziente Betriebsweise der Heizvorrichtung verwirklicht werden. Dabei ist grundsätzlich bei einer solchen Betriebsweise bevorzugt, eine Stromabfuhr im zentralen Bereich der Vorrichtung zu realisieren, wie diese hier beschrieben wird.

Besonders und bevorzugt ist der Einsatz einer hier erfindungsgemäß beschriebenen Vorrichtung mit einem Kraftfahrzeug. Ein solches Kraftfahrzeug, insbesondere ein Nutzfahrzeug (Lastkraftwagen, Bus, etc.), weist eine mobile Verbrennungskraftmaschine oder einen vergleichbaren Antrieb auf, wobei das dort generierte Abgas schließlich von Schadstoffen befreit und/oder einer Temperaturbehandlung unterzogen wird. Zu diesen Zwecken kann die hier erfindungsgemäß vorgeschlagene Vorrichtung von dem Abgas durchströmt werden. Dabei kann die Vorrichtung neben einer katalytisch aktiven Schicht (zumindest teilweise in den Kanälen) auch mit weiteren Mitteln zur Behandlung des Abgasstromes vorgesehen sein (Speicherschicht, Dichtmassen, etc.).

Die Erfindung sowie das technische Umfeld werden nun anhand der Figuren näher erläutert. Es ist darauf hinzuweisen, dass die in den Figuren gezeigten Ausführungsvarianten die Erfindung nicht beschränken. Es zeigen schematisch:
- Fig. 1:: eine erste Ausführungsvariante der erfindungsgemäßen Vorrichtung im Längsschnitt,
- Fig. 2:: eine mögliche Ausgestaltung einer Abgasanlage eines Kraftfahrzeuges,
- Fig. 3:: eine Abwicklung eines Gehäuses mit mehreren Kontaktstellen,
- Fig. 4:: einen ersten Querschnitt einer Ausführungsvariante der Vorrichtung,
- Fig. 5:: eine zweite Ausführungsvariante einer Vorrichtung im Querschnitt, und
- Fig. 6:: eine weitere Ausführungsvariante der Vorrichtung mit einem nachgelagerten Trägerkörper.

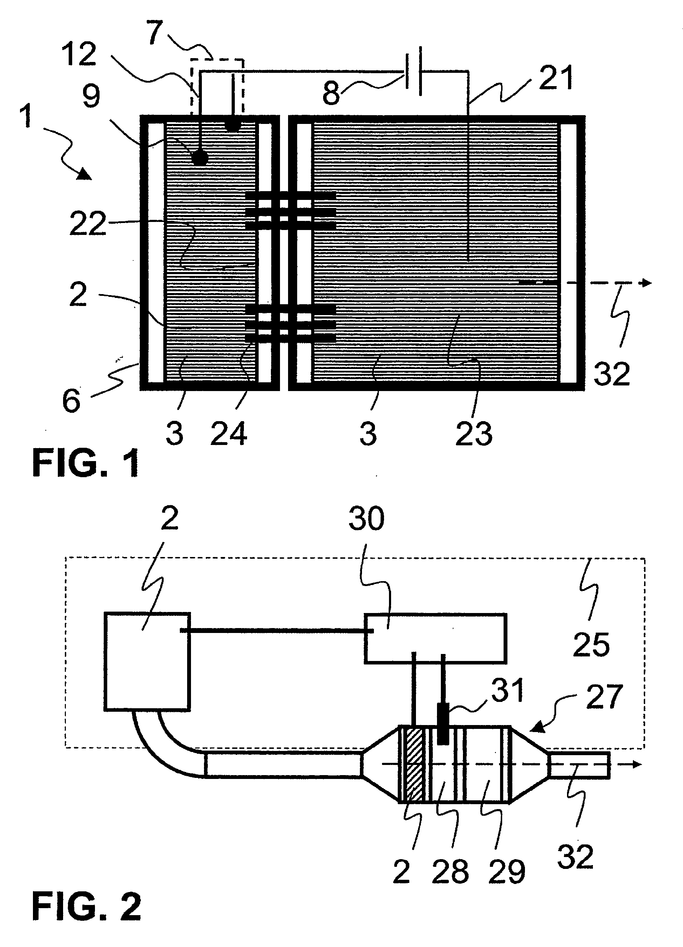

Die Fig. 1 zeigt schematisch und einen Längschnitt eine Vorrichtung 1 mit einem elektrisch beheizbaren Wabenkörper 2 und einem in Strömungsrichtung 32 des Abgases nachgeordneten Trägerkörpers 23. Der links veranschaulichte, schmaler bzw. dünner (10 bis 15 mm) ausgeführte, elektrisch beheizbare Wabenkörper 2 ist von einem Gehäuse 6 umgeben und weist eine Vielzahl sich zwischen den Stirnseiten 22 erstreckenden Kanäle 3 auf. Bezüglich dieses elektrisch beheizbaren Wabenkörpers 2 ist ein einzelner elektrischer Anschluss 7 vorgesehen, der mit einer Spannungsquelle 8 verbunden ist. Der Anschluss 7 ist nun so gestaltet, dass ein erster Kontaktleiter 12 hin zu einer ersten Kontaktstelle 9 eine elektrische Verbindung hin zum Wabenkörper 2 ermöglicht. Darüber hinaus ist ein weiterer Kontaktleiter und weitere Kontaktstelle schematisch angedeutet, wobei die Kontaktleiter so ausgeführt sind, dass diese den gleichen elektrischen Widerstand aufweisen.

Nachdem nun über den Anschluss 7 der Strom in den elektrisch beheizbaren Wabenkörper 2 eingeleitet wird, durchströmt dieser großflächig den elektrisch beheizbaren Wabenkörper 2 und fließt anschließend in die hier angedeuteten Kontaktstifte 24, die in einer entsprechenden Mehrzahl zentral und nah beieinander geordnet sind. Damit wird der Strom übergeleitet auf den nachfolgenden Trägerkörper 23, der letztendlich mit der elektrischen Masse 21 verbunden ist.

Mit der hier veranschaulichten Ausführungsform ist realisiert, was mit anderen Ausführungsformen grundsätzlich auch möglich ist, nämlich dass der elektrisch beheizbare Wabenkörper 2 mit einem einteiligen Gehäuse 6 ausgeführt, also insbesondere eine Schlitzung und/oder eine mehrteilige Ausführung mit Schalen vermieden werden kann, da die Stromabfuhr über den nachgelagerten Trägerkörper 23 erfolgt.

Die Fig. 2 soll schematisch eine mögliche Ausführungsvariante eines Abgassystems 27 zeigen, wobei die Erfindung in ein Kraftfahrzeug 25 (z.B. ein Nutzfahrzeug) integriert ist. Ein solches Kraftfahrzeug 25 hat regelmäßig einen Antrieb 26 (z.B. einen Dieselmotor), in dem Abgas produziert wird, welches in Strömungsrichtung 32 regelmäßig diverse Abgasbehandlungseinrichtungen (Katalysatoren, Filter, Reaktoren, Adsorber, Heizer, Mischer,...) durchströmt. Hier dargestellt ist nun, dass das Abgas zunächst einen erfindungsgemäß ausgeführten elektrisch beheizbaren Wabenkörper 2 durchströmt, dann einen katalytischen Konverter 28 und schließlich noch einen Speicher 29 (z. B. für Stickoxide, Partikel oder Ähnliches). Das gereinigte Abgas wird dann an die Umgebung abgelassen. Zum Betrieb eines solchen elektrisch beheizbaren Wabenkörpers kann zudem eine Kontrolleinheit 30 (z.B. Fahrzeugsteuerung oder Ähnliches) vorgesehen sein, die, beispielsweise aus Informationen des Antriebs 2 zwei und/oder im Abgassystem 27 vorgesehene Messfühler 31, den elektrisch beheizbaren Wabenkörper 2 zu gewünschten Zeiträumen mit Strom versorgen lässt. Es ist offensichtlich, dass das hier dargestellte Abgassystem 27 schematisch ist und in beliebigen Kombinationen mit anderen Abgasbehandlungseinheiten kombiniert und/oder ergänzt werden kann.

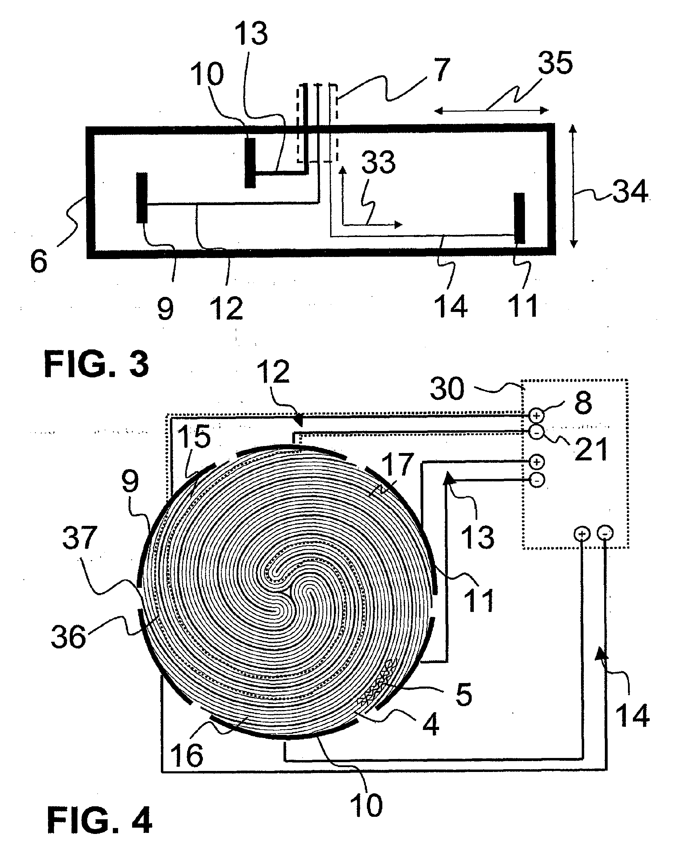

Fig. 3 zeigt zur Veranschaulichung ein abgewickeltes Gehäuse 6, das also im Wesentlichen eben gerollt dargestellt ist. Bei dem hier zentral angeordneten Anschluss 7 werden ein erster Kontaktleiter 12, ein zweiter Kontaktleiter 13 und ein dritter Kontaktleiter 14 vereint. Diese Kontaktleiter 12, 13, 14 erstrecken sich jeweils getrennt hin bis zu einer ersten Kontaktstelle 9, einer zweiten Kontaktstelle 10 und einer dritten Kontaktstelle 11. Dabei haben die Kontaktstellen jeweils einen unterschiedlichen Abstand 33 von dem einzelnen Anschluss 7. Die hierfür unterschiedliche Länge der Kontaktleiter wird beispielsweise durch die Bereitstellung unterschiedlicher Querschnitte so angepasst, (hier dargestellt durch die unterschiedlich dicke Linienform), dass alle Kontaktleiter den gleichen elektrischen Widerstand haben. Aus Fig. 3 lässt sich auch erkennen, dass die einzelnen Kontaktstellen über den Umfang 35 und/oder die Länge 34 (in axialer Richtung) des Gehäuses 6 verschieden angeordnet sein können.

Die Fig. 4 zeigt, in einer Draufsicht, eine weitere Ausführungsvariante einer Vorrichtung mit einem elektrisch beheizbaren Wabenkörper 2. Der Wabenkörper 2 ist mit einer Vielzahl von glatten Blechfolien 4 und strukturierten Blechfolien 5 gebildet, die zwischen sich Kanäle 3 begrenzen. Bei der hier gezeigten, stirnseitigen, Ansicht kann erkannt werden, dass der Wabenkörper 2 mit ersten Stapel 15, einen zweiten Stapel 16 und einen dritten Stapel 17 ausgebildet ist. Jeder Stapel umfasst eine Mehrzahl von glatten Blechfolien 4 und strukturierten Blechfolien 5, deren Endbereiche am Gehäuse und deren Innenbereich mit der Krümmung zentral angeordnet sind. Zwischen den einzelnen Stapeln sind zudem Isolierungen 37 vorgesehen.

Bei der hier veranschaulichten Ausführungsvariante erfolgt die Zustromzufuhr und -abfuhr im Wesentlichen in einer Ebene, so dass das Gehäuse gegebenenfalls mehrere Teile aufweist. Es ist hier exemplarisch für den ersten Stapel 15 ein Strompfad 36 (gepunktete Linie) dargestellt. Demnach fließt der Strom ausgehend von einer Spannungsquelle 8 in einen ersten Kontaktleiter 12 hin zur ersten Kontaktstelle 9 und wird dort in die Blechfolien eingeleitet. Damit folgt der Strom nun ausgehend von einem Endbereich den Blechfolien bis hin zum zentralen Bereich und kehrt dann wieder zum gegenüberliegenden Endbereich zur elektrischen Masse 21 zurück. Die beiden anderen Stapel werden in entsprechender Weise mit Strom durchflossen. Die Einleitung von Strom wird mittels einer gemeinsamen Kontrolleinheit 30 bewirkt, wobei diese die Stapel (gegebenenfalls einzeln und/oder unabhängig voneinander) betreiben kann.

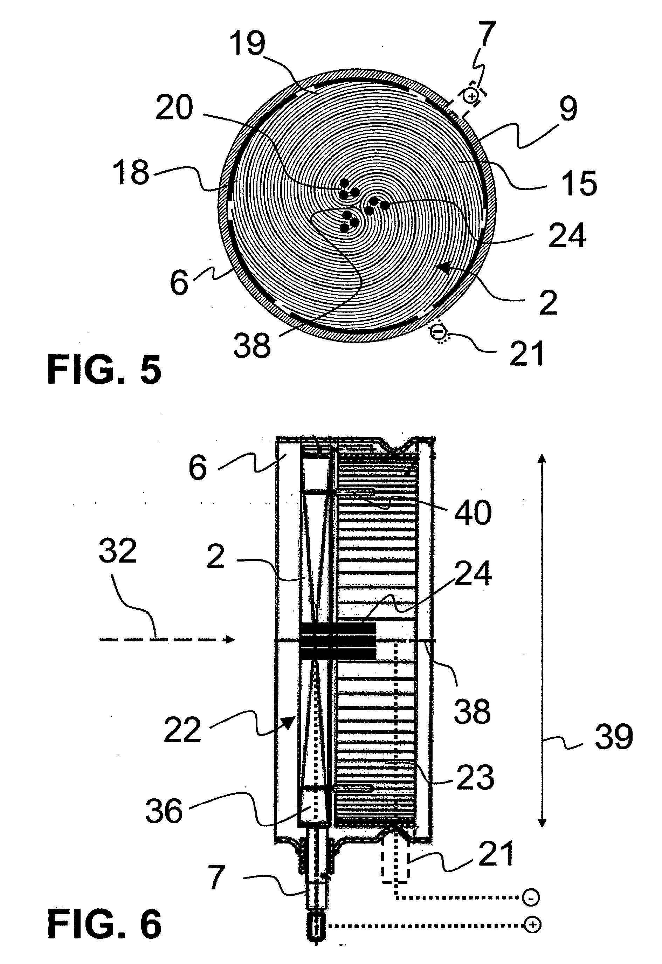

In der Fig. 5 ist eine weitere stirnseitige Ansicht eines elektrisch beheizbaren Wabenkörpers 2 mit einteiligem, rohrähnlichem, Gehäuse 6 dargestellt. Durch das Gehäuse 6 wird hier zumindest teilweise elektrisch isoliert über den Anschluss 7 Strom zugeführt. Dieser Strom fließt über elektrische Kontaktleiter, die beispielsweise nach Art einer Beschichtung aufgespritzt sein können, hin zu den jeweiligen Kontaktstellen 9, 10, 11. Der Wabenkörper 2 ist mit drei Stapeln dargestellt, wobei hier nur der erste Stapel 15 beispielhaft gekennzeichnet ist. Dieser erste Stapel 15 weist wiederum Blechfolien auf, die hier so angeordnet sind, dass sie sich mit ihrem ersten Endbereich 18 und ihrem zweiten Endbereich 19 bis an das Gehäuse 6 erstrecken und einen Innenbereich 20 aufweisen, der in der Nähe des Zentrums 38 positioniert ist. In diesem Innenbereich 20 sind nun jeweils eine Mehrzahl von Kontaktstiften 24 vorgesehen, die eine Stromweiterleitung in eine dahinterliegende Ebene, beispielsweise hin zu einem Trägerkörper 23, ermöglichen und somit schließlich eine Verbindung hin zur hier schematisch angedeuteten elektrischen Masse 21 gewährleistet.

Schließlich sei auch auf ein konkretes Ausführungsbeispiel der Vorrichtung 1 verwiesen, das in Fig. 6 als Querschnitt dargestellt ist. Hier sollen insbesondere die Größenverhältnisse angedeutet werden, wie sie beispielsweise bei elektrisch beheizbaren Wabenkörpern 2 mit großem Durchmesser 39 herrschen. Der Durchmesser 39 beträgt dabei insbesondere mindestens 200 mm, kann jedoch auch größer als 500 mm oder sogar 1 m sein. Das Abgas, das beispielsweise von einem Dieselmotor eines Lastkraftwagens erzeugt wurde, strömt nun in Strömungsrichtung 32 auf Seite 22 des elektrisch beheizbaren Wabenkörpers 2. Dort wird der Abgasstrom in viele Teilabgasströme aufgeteilt, welche dann einzeln die Kanäle durchströmen. Der elektrisch beheizbare Wabenkörper 2 ist hier wiederum (elektrisch isoliert) in einem Gehäuse 6 positioniert. Der elektrisch beheizbare Wabenkörper 2 ist dabei gegenüber dem Gehäuse 6 isoliert angeordnet, wobei gleichzeitig eine elektrisch isolierte Stromzufuhr hin zum Wabenkörper 2 über den Anschluss 7 erfolgt. Dabei bildet sich nun ein Strompfad 36 (gepunktete Linie) aus, so dass der Wabenkörper 2 großflächig von Strom durchströmt und aufgrund seines Widerstandes erhitzt wird. Diese Hitze kann der elektrisch beheizbare Wabenkörper 2 nun zu verschiedenen Zwecken dem durchströmenden Abgasstrom zuführen.

Nachdem der Strom den Wabenkörper 2 durchströmt hat, wird dieser über die im Zentrum 38 positionierten Kontaktstifte 24 in einen dahinterliegenden Trägerkörper 23 eingeleitet. Über diesen Trägerkörper 23 erfolgt die Stromabfuhr hin zur elektrischen Masse 21. Der elektrisch beheizbare Wabenkörper 2 wird hierbei nicht nur über die Kontaktstifte 24, sondern zusätzlich über (elektrisch isolierte) Stützstifte 40 stirnseitig in einer definierten Position mit einem kleinen Spalt hin zum Trägerkörper 23 fixiert.

### Bezugszeichenliste

- 1: Vorrichtung
- 2: elektrisch beheizbaren Wabenkörper
- 3: Kanal
- 4: glatte Blechfolie
- 5: strukturierte Blechfolie
- 6: Gehäuse
- 7: Anschluss
- 8: Spannungsquelle
- 9: erste Kontaktstelle
- 10: zweite Kontaktstelle
- 11: dritte Kontaktstelle
- 12: erster Kontaktleiter
- 13: zweiter Kontaktleiter
- 14: dritter Kontaktleiter
- 15: erster Stapel
- 16: zweiter Stapel
- 17: dritter Stapel
- 18: erster Endbereich
- 19: zweiter Endbereich
- 20: Innenbereich
- 21: elektrische Masse
- 22: Stirnseite
- 23: Trägerkörper
- 24: Kontaktstift
- 25: Kraftfahrzeug
- 26: Antrieb
- 27: Abgassystem
- 28: Konverter
- 29: Speicher
- 30: Kontrolleinheit
- 31: Messfühler
- 32: Strömungsrichtung
- 33: Abstand
- 34: Länge
- 35: Umfang
- 36: Strompfad
- 37: Isolierung
- 38: Zentrum
- 39: Durchmesser
- 40: Stützstift

## Patentansprüche

1. Vorrichtung (1) umfassend einen elektrisch beheizbaren Wabenkörper (2), wobei dieser Kanäle (3) bildende Blechfolien (4, 5) aufweist, die über ein Gehäuse (6) elektrisch kontaktiert sind, wobei das Gehäuse (6) einen Anschluss (7) zum Verbinden mit einer Spannungsquelle (8) und eine Mehrzahl von dem Anschluss (7) entfernt angeordneten Kontaktstellen (9, 10, 11) zum Kontaktieren der Blechfolien (4, 5) hat sowie jeweils einen Kontaktleiter (12, 13, 14) zwischen Anschluss (7) und einer Kontaktstelle (9, 10, 11), die den gleichen elektrischen Widerstand aufweisen.

2. Vorrichtung (1) nach Patentanspruch 1, wobei die Blechfolien (4, 5) zu einer Mehrzahl von Stapeln (15, 16, 17) angeordnet sind, wobei alle Blechfolien (4, 5) eines Stapels (15, 16, 17) mit einer Kontaktstelle (9, 10, 11) elektrisch leitend verbunden sind.

3. Vorrichtung (1) nach Patentanspruch 1 oder 2, wobei die Blechfolien (4, 5) gegenüberliegende Endbereiche (18, 19) aufweisen, mit denen sie am Gehäuse (6) anliegen.

4. Vorrichtung (1) nach einem der vorhergehenden Patentansprüche, wobei die Blechfolien (4, 5) einen Innenbereich (20) aufweisen, der elektrisch leitend mit einer elektrischen Masse (21) verbunden ist.

5. Vorrichtung (1) nach einem der vorhergehenden Patentansprüche, wobei die Blechfolien (4, 5) von ihrer Kontaktstelle (9, 10, 11) bis hin zu einem Innenbereich (20), der elektrisch leitend mit einer elektrischen Masse (21) verbunden ist, den gleichen elektrischen Widerstand aufweisen.

6. Vorrichtung (1) nach einem der vorhergehenden Patentansprüche, wobei die Kontaktleiter (12, 13, 14) des Gehäuses (6) als eine Beschichtung ausgeführt sind.

7. Vorrichtung (1) nach einem der vorhergehenden Patentansprüche, wobei der eine elektrisch beheizbare Wabenkörper (2) über eine Stirnseite (22) an einem weiteren Trägerkörper (23) abgestützt ist.

8. Vorrichtung (1) nach Patentanspruch 7, wobei eine Mehrzahl von elektrisch leitenden Kontaktstiften (24) den elektrisch beheizbare Wabenkörper (2) über eine Stirnseite (22) abgestützt und elektrisch leitend mit dem weiteren Trägerkörper (23) verbindet.

9. Vorrichtung (1) nach einem der vorhergehenden Patentansprüche, wobei mehrere separate Kontaktleiter (12, 13, 14) über den Anschluss (7) und extern über eine Kontrolleinheit (30) mit einer Spannungsquelle (8) verbindbar sind.

10. Kraftfahrzeug (25) aufweisend wenigstens eine Vorrichtung (1) nach einem der vorhergehenden Patentansprüche.

## Claims

1. A device (1) comprising an electrically heatable honeycomb body (2), with said honeycomb body (2) having sheet-metal foils (4, 5) which form ducts (3) and which are electrically contacted by means of a housing (6), with the housing (6) having a terminal (7) for connecting to a voltage source (8) and having a plurality of contact points (9, 10, 11), which are arranged remote from the terminal (7), for contacting the sheet-metal foils (4, 5) and also having in each case one contact conductor (12, 13, 14) between the terminal (7) and a contact point (9, 10, 11), wherein the conductors (12, 13, 14) have the same electrical resistance.

2. The device (1) as claimed in claim 1, wherein the sheet-metal foils (4, 5) being arranged in a multiplicity of stacks (15, 16, 17), wherein all the sheet-metal foils (4, 5) of a stack (15, 16, 17) being connected in an electrically conductive fashion to one contact point (9, 10, 11).

3. The device (1) as claimed in claim 1 or 2, wherein the sheet-metal foils (4, 5) having opposite end regions (18, 19), by means of which said sheet-metal foils (4, 5) bear against the housing (6).

4. The device (1) as claimed in one of the preceding claims, wherein the sheet-metal foils (4, 5) having an inner region (20) which is connected in an electrically conductive fashion to an electrical ground (21).

5. The device (1) as claimed in one of the preceding claims, wherein the sheet-metal foils (4, 5) having the same electrical resistance from their contact point (9, 10, 11) to an inner region (20) which is connected in an electrically conductive fashion to an electrical ground (21).

6. The device (1) as claimed in one of the preceding claims, wherein the contact conductors (12, 13, 14) of the housing (6) being formed as a coating.

7. The device (1) as claimed in one of the preceding claims, wherein the one electrically heatable honeycomb body (2) being supported via an end side (22) on a further support body (23).

8. The device (1) as claimed in claim 7, wherein a multiplicity of electrically conductive contact pins (24) supporting the electrically heatable honeycomb body (2) via an end side (22) and connecting said electrically heatable honeycomb body (2) in an electrically conductive fashion to the further support body (23).

9. The device (1) as claimed in one of the preceding claims, wherein it being possible for a plurality of separate contact conductors (12, 13, 14) to be connected via the terminal (7) and externally via a control unit (30) to a voltage source (8).

10. A motor vehicle (25) having at least one device (1) as claimed in one of the preceding claims.

## Revendications

1. Dispositif (1) comprenant un corps en nids d'abeilles (2) pouvant être chauffé électriquement, celui-ci comportant des feuilles de tôle (4, 5) formant des canaux (3), qui sont contactés électriquement à l'intermédiaire d'un boîtier (6), le boîtier (6) ayant une connexion (7) pour la liaison avec une source de tension (8), et une pluralité de positions de contact (9, 10, 11) agencées loin de la connexion (7) pour contacter les feuilles de tôle (4, 5) ainsi que respectivement un conducteur de contact (12, 13, 14) entre la connexion (7) et une position de contact (9, 10, 11), qui ont la même résistance électrique.

2. Dispositif (1) selon la revendication 1, les feuilles de tôle (4, 5) étant agencées en une pluralité de piles (15, 16, 17), toutes les feuilles de tôle (4, 5) d'une pile (15, 16, 17) étant liées de manière électro conductrice.

3. Dispositif (1) selon la revendication 1 ou 2, les feuilles de tôle (4, 5) comportant des régions d'extrémité opposées (18, 19) avec lesquelles elles s'appliquent contre le boîtier (6).

4. Dispositif (1) selon l'une des revendications précédentes, les feuilles de tôle (4, 5) comportant une région interne (20), qui est liée de manière électro conductrice avec une masse électrique (21).

5. Dispositif (1) selon l'une des revendications précédentes, les feuilles de tôle (4, 5) ayant la même résistance électrique depuis leurs position de contact (9, 10, 11) jusqu'à une région interne (20) qui est liée de façon électro conductrice avec une masse électrique (21).

6. Dispositif (1) selon l'une des revendications précédentes, les conducteurs de contact (12, 13, 14) du boîtier (6) étant réalisés comme un revêtement.

7. Dispositif (1) selon l'une des revendications précédentes, le corps en nids d'abeilles pouvant être chauffé électriquement (2), est supporté contre un autre corps de support 23 via une face frontale (22).

8. Dispositif (1) selon la revendication 7, une pluralité de tiges de contact à conductibilité électrique (24) supportant le corps en nids d'abeilles (2) pouvant être chauffé électriquement via une face frontale (22) et le reliant de manière électro conductrice avec le corps de support (23).

9. Dispositif (1) selon l'une des revendications précédentes, une pluralité de conducteurs de contact séparés (12, 13, 14) pouvant être connectés à l'intermédiaire de la connexion (7) avec une source de tension (8) et de façon externe à l'intermédiaire d'une unité de contrôle (30).

10. Véhicule automobile (25), comportant au moins un dispositif (1) selon l'une des revendications précédentes.
